(19) Europäisches Patentamt
European Patent Office
Office européen des brevets

(11) **EP 0 572 808 B1**

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(51) Int. Cl.$^6$: **B60T 8/32**

(21) Anmeldenummer: **93107109.6**

(22) Anmeldetag: **03.05.1993**

(54) **Antiblockierregelsystem**

Anti-skid system

Système de régulation antiblocage

(84) Benannte Vertragsstaaten:
**DE FR GB IT**

(30) Priorität: **09.05.1992 DE 4215350**

(43) Veröffentlichungstag der Anmeldung:
**08.12.1993 Patentblatt 1993/49**

(73) Patentinhaber: **Fahrzeugtechnik Ebern GmbH**
**D-96106 Ebern (DE)**

(72) Erfinder:
• **Roll, Georg, Dr.**
**W-6056 Heusenstamm (DE)**
• **Ohm, Heinz-F.**
**W-6108 Weiterstadt (DE)**

(74) Vertreter: **Oppermann, Ewald, Dipl.-Ing.**
**Am Wiesengrund 35**
**63075 Offenbach (DE)**

(56) Entgegenhaltungen:
**EP-A- 0 422 515          EP-A- 0 443 066**

**Beschreibung**

Die Erfindung betrifft ein Antiblockierregelsystem für Kraftfahrzeuge nach dem Oberbegriff des Anspruchs 1.

Bei der zyklischen Umschaltung zwischen den typischen ABS-Regelungsphasen "Druckabbau", "Druckhalten" und "Druckaufbau" ist neben der Bestimmung geeigneter Umschaltzeitpunkte auch die Kenntnis von Referenzdruckpunkten von entscheidender Bedeutung für die Erreichung großer homogener Fahrzeug-Bremsverzögerungen bei möglichst hohem Bremskomfort. Wenn man von homogenen Bodenverhältnissen ausgeht und weiterhin annimmt, daß sich die Reifen- und Bremseneigenschaften während einer Bremsung praktisch nicht verändern, so könnte ein Antiblockiersystem eine optimale Bremsung erzielen, indem es an jedem blockiergefährdeten Rad einen Bremsdruck einstellt, der um einen differentiellen Betrag unterhalb des Blockierdrucks liegt. Dieser Druck könnte für jedes Rad dann gespeichert werden, wenn während einer Bremsung erstmalig eine Blockiertendenz auftritt. Mit dem nach der Ausregelung der Blockierneigung eingestellten minimal unter dem Blockierdruck liegenden Optimaldruck könnte die Bremsung dann mit maximaler Verzögerung, guter Fahrstabilität und hohem Regelungskomfort zu Ende geführt werden. Sollte nach der Einstellung der Konstantdrücke ein Rad doch noch zum Blockieren neigen, würde der Einstellvorgang auf der Basis des neuen Blockierdrucks wiederholt werden.

Diese einfache Strategie darf jedoch praktisch nicht zum Einsatz gebracht werden, da die Radblockierdrücke aus folgenden Gründen starken Schwankungen unterworfen sein können:

- Obwohl fast alle realen Bremsungen unter mehr oder weniger homogenen Bodenverhältnissen ablaufen, treten doch teilweise enorme lokale Reibwertschwankungen auf.

- Das dynamische Verhalten des Fahrzeugs führt zu Änderungen bei den Radaufstandskräften (speziell durch kurvenbedingte Lastwechsel oder in der Anbremsphase durch verzögerungsänderungsbedingtes Fahrzeugeinnicken).

- Während einer Bremsung aus hoher Anfangsgeschwindigkeit kann sich die Charakteristik der Reifen durch Erwärmung stark ändern.

- Die Bremsanlage kann während einer langen Bremsung Fading-Effekte aufweisen, so daß ein eingestellter Konstantbremsdruck zu einer mit der Zeit absinkenden Bremskraft führt.

Es ist daher für eine sichere Regelbremsung unbedingt erforderlich, an jedem Rad, das im stabilen Schlupfbereich läuft, den Bremsdruck wieder zu erhöhen, um im Extremfall wieder den vom Fahrer gewünschten HBZ-Druck zu erreichen.

Außerdem ist es nicht zulässig, den Druck beliebig schnell wieder in die Nähe des früheren Blockierdrucks zu fahren, nachdem die Blockierneigung gerade erst ausgeregelt wurde, da ausfederungsbedingte Veränderungen der Radaufstandskräfte auch zu dynamischen Veränderungen der Blockierdrücke führen.

Es ist deshalb Aufgabe der Erfindung, ein Antiblockierregelsystem der eingangs genannten Art zu schaffen, das eine optimale Druckaufbaufunktion aufweist und die Vorteile des Druckhaltens im Optimalpunkt über lange Zeitbereiche annähernd erfüllt und damit gegenüber konventionellen ABS-Regelsystemen zu besseren Bremsverzögerungen bei größerer Fahrstabilität und höherem Regelungskomfort führt.

Die Lösung dieser Aufgabe gelingt mit den im kennzeichnenden Teil des Anspruchs 1 angegebenen Merkmalen. Vorteilhafte Weiterbildungen sind in den Ansprüchen 2 bis 9 angegeben.

Das erfindungsgemäße Antiblockierregelsystem sieht daher vor, den Druckaufbau in der Wiederbelastungsphase nicht mit konstantem Gradienten durchzuführen, sondern den Bremsdruck zunächst steil und dann bei annäherndem Erreichen des zu erwartenden Blockierdrucks immer flacher zu verfahren. Durch den Einsatz derartiger exponentieller Belastungsrampen wird schon frühzeitig ein gutes Druckniveau erreicht und auf homogenem Untergrund über lange Zeiträume gehalten.

Der am Ende der Belastungsrampe zu erwartende Einbruch der Radgeschwindigkeit verläuft aufgrund der flachen Endsteigung der e-Rampe i.a. "gutmütig" und ist leicht ausregelbar.

Die Grundvoraussetzung für den Erfolg dieses Druckaufbau-Mechanismus ist das Verfahren der Druckfunktion zwischen guten Druck-Referenzpunkten.

Dabei wird vorausgesetzt, daß dem ABS-Regler eine Information über den im betrachteten Radbremszylinderkreis existierenden Druck zur Verfügung steht. Es handelt sich dabei nicht um absolute Drücke sondern jeweils nur um Druckrelationen. Durch den Einsatz von Plunger-Druckmodulatoren (s. z. B. DE-OS 35 30 280) wird der hohe Kostenaufwand für die Bremsdruckgeber auf einfach Weise vermieden.

Die Erfindung soll an einem Ausführungsbeispiel näher erläutert werden. Es zeigen:

Figur 1     ein Funktionsschaltbild (Modulator, ABS, Rampensteuerung)

Figur 2     ein Zeitdiagramm einer Regelbremsung mit konventioneller Blockierschutzregelung

Figur 3     ein Zeitdiagramm der Druckspeicherpunkte und des Druckaufbauprofils

Figur 4     eine Funktion zur Bestimmung der Maximal-Druckanfahrpunkte

| Figur 5 | den Aufbau eines einkanaligen Plunger-Druckmodulators mit Kolbenweg-Meßsystem |
| Figur 6 | eine Schaltungsrealisierung |

Dabei bedeuten die verwendeten Variablen und Konstanten:

| S | = Signal vom Radsensor, das eine Bestimmung der aktuellen Umfangsgeschwindigkeit V des betrachteten Rades ermöglicht |
| V | = Momentane Radumfangsgeschwindigkeit |
| A | = gefilterte Radverzögerung/-beschleunigung |
| VREF | = berechnete Fahrzeugreferenzgeschwindigkeit (wird aus gefilterten Radgeschwindigkeiten und Plausibilitätsüberlegungen gebildet) |
| AREF | = gefilterte Fahrzeugverzögerung zeitliche Ableitung von VREF (liefert eine geschätzte Fahrzeugverzögerung, die aufgrund der kurzen Regelungszykluszeiten allerdings sehr stark schwankt; aus diesem Grund erfolgt allgemein eine Filterung dieses Signals; AREF wird als eine derartige gefilterte Fahrzeugverzögerung angenommen) |
| RE | = Anzeigesignal für Radgeschwindigkeitseinbruch (boolesches 1-bit-Signal, das auf logisch '1' gesetzt wird, wenn die Radgeschwindigkeit überbremsungsbedingt in einen zu großen Schlupfbereich einläuft, und logisch '0' wird, wenn der aktuelle Radschlupf stabil ist) |
| DeltaVhalt | = Geschwindigkeitsdifferenz, die das Rad während der Zeit DeltaThalt durchläuft |
| DeltaThalt | = Zeitdauer der Druckhaltephase während der Beschleunigung des Rades in den stabilen Schlupf |

| Tein_i | = Zeitpunkt, zu dem innerhalb einer Regelbremsung zum i-tenmal ein überbremsungsbedingter Radgeschwindigkeitseinbruch erkannt wird |
| Thalt_i | = Zeitpunkt, zu dem innerhalb einer Regelbremsung zum i-tenmal eine Druckhaltephase beginnt, das zuvor überbremste Rad also beschleunigt |
| Taus_i | = Zeitpunkt, zu dem innerhalb einer Regelbremsung zum i-tenmal ein Radgeschwindigkeitseinbruch ausgeregelt worden ist |
| TS | = Zeitpunkt, zu dem die Suchrampe aktiviert wird |
| TPAuf | = zulässige Zeitdauer des Druckaufbaus, innerhalb der eine erneute Radblockiertendenz erwartet wird |
| P | = Radbremszylinderdruck (dieser Druck wird bei der Regelbremsung vom ABS-Regler eingestellt; die hier vorgestellten Mechanismen können indirekt über den ABS-Regler Einfluß auf P nehmen) Bei dem hier vorgestellten Konzept wird davon ausgegangen, daß P entweder durch ein Druckmeßgerät erfaßt wird, oder daß beispielsweise bei Verwendung eines ABS-Druckmodulators nach dem Plungerprinzip ein direkter Zusammenhang zwischen der meßbaren Stellung des Vorderraddruckkolbens und dem relativen Vorderradbremsdruck besteht, so daß P als Relativgröße aus der jeweiligen Kolbenstellung abgelesen werden kann. |
| Palt | = Radbremsdruck P des vorherigen Regelungszyklus |
| PS | = Sollwert für den einzustellenden Bremsdruck (wird vom Druckfunktionsgenerator in der Druckaufbauphase berechnet und dem ABS-Regler übergeben) |

| | |
|---|---|
| PSneu | = neuer Wert von PS für den nächsten Regelungszyklus |
| Pein | = Wert von P, bei dem das Rad Blockiertendenzen zeigt |
| Pein_i | = Wert von P, bei dem die Vorderradgeschwindigkeit zum i-tenmal während einer Regelbremsung einbricht |
| Pbeschl | = Wert von P, bei dem das zuvor eingebrochene Rad wieder beschleunigt |
| PSAnf | = Druckanfahrpunkt als Startdruckpunkt für die Druck-Wiederbelastungsrampe |
| DPSAnf | = Minimalabstand von PSAnf zu Pein aufgrund der Rad-, Achs- und Fahrzeugdynamik |
| DeltaPAuf | = Druckbetrag, um den der Radbremsdruck von einem zum nächsten Regelungszyklus in der Wiederbelastungsphase erhöht wird |
| DeltaPMin | = Druckbetrag, um den der Radbremsdruck von einem zum nächsten Regelungszyklus in der Wiederbelastungsphase mindestens erhöhte wird |
| DeltaPMax | = Druckunterschied zwischen Pein und Pbeschl, bei dessen Überschreitung der Druckanfahrpunkt PSAnf auf der Basis von Pbeschl berechnet wird |
| Pab | = Eingeschlossener Radbremsdruck bei Schließen des HBZ-Ventils (Plunger-Druckmodulator) |
| K1, K2 | = Konstanten bei der Berechnung der Bremsdruckfunktionen |
| z | = Eingestellte Tauchkolbenposition (Plunger-Druckmodulator) |
| Regelungszyklustakt | = Taktsignal, das mit der Zeitdauer (eines ABS-Regelungszyklus (hier 8ms) geschaltet wird ==> 125 HZ |
| 1g | = Erdbeschleunigung = 9.81 m/s^2 |

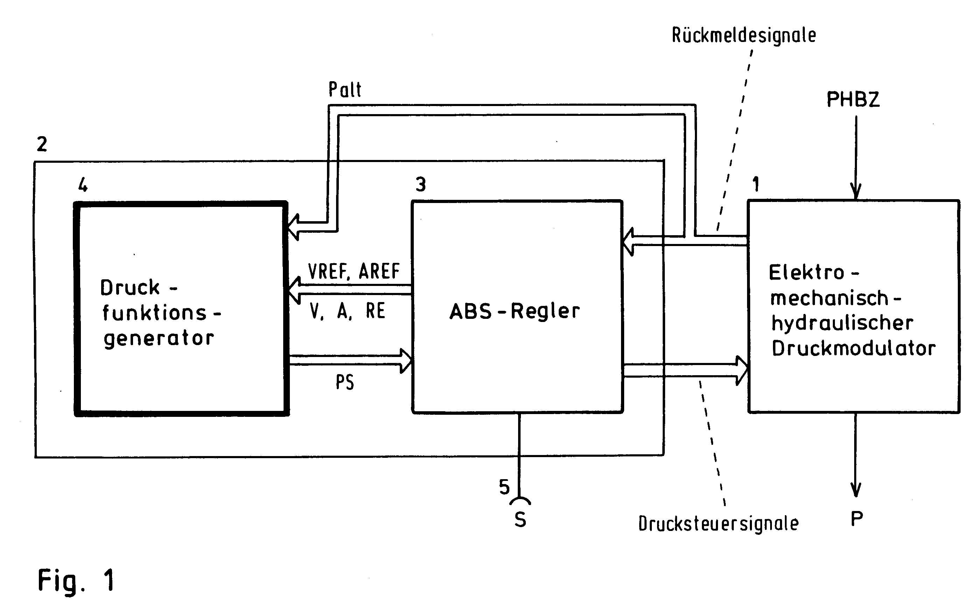

Figur 1 zeigt ein Blockschaltbild eines Antiblockiersystems, bestehend aus einem elektro-mechanischhydraulischen Druckmodulator (1) und einer elektronischen Steuereinheit (2), die neben den Komponenten für den ABS-Regler (3) noch eine Hilfsschaltung (4) beinhaltet, die die Regelungsstrategie ausführt und daher als 'Druckfunktionsgenerator' bezeichnet wird. Die Funktionsblöcke (3,4) können sowohl durch Spezial-Hardware als auch durch eine softwaremäßige Implementierung realisiert werden.

Aus Gründen der Übersichtlichkeit werden die hier dargelegten Mechanismen nur für ein Fahrzeugrad bzw. nur für einen Bremskanal vorgestellt, so daß die Figur und alle weiteren Darstellungen immer nur einkanalige Komponenten aufweisen.

Eine Erweiterung des Konzepts auf n Kanäle ist leicht möglich, da keine kanalübelgreifenden Zusammenhänge bestehen und die Mechanismen daher getrennt für jedes Rad bzw. jeden Bremskanal betrachtet werden können.

Die rad- bzw. bremskanalspezifischen Daten und Signale müßten bei Erweiterung auf mehrere Kanäle mit entsprechenden Indizes versehen werden, die hier ebenfalls aus Gründen der besseren Anschaulichkeit weggelassen wurden.

Um die Einbindung des Druckfunktionsgenerators in ein normales Antiblockiersystem darzustellen, werden nachfolgend kurz die funktionalen Zusammenhänge der Blöcke (1,3,4) beschrieben. Der ABS-Regler (3) bekommt von einem Radsensor (5) eine Impulsfolge S, aus deren Frequenz er direkt die reale Umfangsgeschwindigkeit V des betrachteten Fahrzeugrades berechnet. Aus V ermittelt der ADS-Regler (3) weitere interne Referenzsignale, wie beispielsweise die Fahrzeug-Referenzgeschwindigkeit VREF und die Fahrzeug-Referenzverzögerung AREF, damit er Überbremsungszustände erkennen und sicher ausregeln kann. Im Eintrittsfall gibt der ABS-Regler (3) Drucksteuersignale an den Druckmodulator (1), so daß dieser den vom Fahrer vorgegebenen Hauptbremszylinderdruck PHBZ reduziert und als Radbremszylinderdruck P zum Radbremskreis weiterleitet. Der hier zugrundegelegte Druckmodulator gibt Rückmeldesignale an den ABS-Regler; es handelt sich dabei um Informationen über den eingestellten Bremsdruck P, also im Falle eines Plunger-Druckmodulators (s. z. B. DE-OS 35 30 280) um die druckbestimmende Position des Tauchkolbens.

Die internen Referenzsignale können vom Druckfunktionsgenerator (4) mitgenutzt werden.

Der ABS-Regler arbeitet nun nach bekannten Grundstrategien die Blockierschutzregelung ab. Parallel dazu berechnet der Druckfunktionsgenerator (4) in den Druckaufbauphasen optimale Druckwiederbelastungsgradienten und übergibt diese an den ABS-Regler, so daß dieser seine Grundregelstrategie mit den Daten des Druckfunktionsgenerators verfeinern kann.

ABS-Regler und Druckfunktionsgenerator arbeiten also parallel. Die Grundfunktionen des ABS-Reglers werden als bekannt vorausgesetzt und nicht näher beschrieben. In einer praktischen Realisierung können der ABS-Regler (3) und der Druckfunktionsgenerator (4) als eine Komponente angesehen werden. Eine logische Auftrennung erfolgt hier nur, um die Funktionen des Druckfunktionsgenerators zu verdeutlichen.

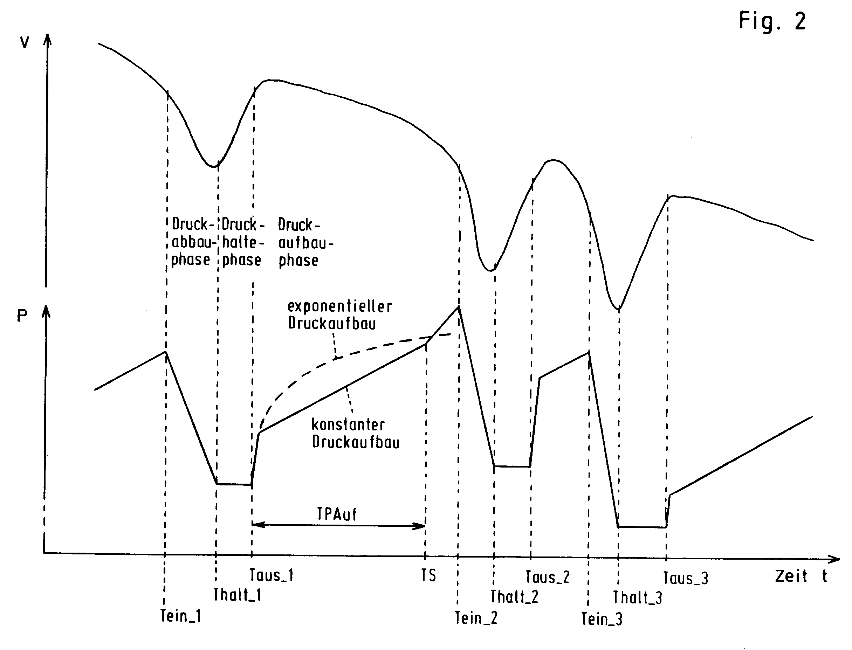

Die praktisch eingesetzten Antiblockiersysteme nach dem Stand der Technik schalten zyklisch zwischen den Regelungszuständen 'Druckabbau', 'Druckhalten' und 'Druckaufbau' an jedem Rad um. Dazu zeigt Figur 2 eine beispielhafte Blockierschutzregelung auf homogenem Untergrund. Eine Druckentlastung findet üblicherweise immer darin statt, wenn das betreffende Rad einen maximal zulässigen Verzögerungswert bei hinreichend hohem Schlupf überschreitet. Diese Situation ist jeweils zu den Zeitpunkten Tein_i gegeben. Ein Halten des erreichten Drucks erfolgt dann, wenn das Rad aus der vorherigen Verzögerung in die Beschleunigungsphase übergeht, also wieder in Richtung stabiler Schlupfbereiche läuft (tritt auf zu den Zeitpunkten Thalt_i). Ein erneuter Druckaufbau findet statt, wenn das Rad wieder eindeutig im stabilen Schlupf läuft (Zeitpunkte Taus_i, wobei zumeist erst ein größerer Drucksprung und danach ein kontinuierlicher Druckaufbau mit konstantem Gradienten erfolgt (im folgenden 'Druckaufbauphase' oder 'Wiederbelastungsphase' genannt), bis ein dadurch erzwungener erneuter Radgeschwindigkeitseinbruch wieder eine Druckabbauphase einleitet. Sollte innerhalb einer fest vorgegebenen Druckaufbauzeit TPAuf kein derartiger Einbruch erfolgen, so wird eine steilere Druckrampe (Suchrampe) gefahren, damit der eingestellte Druck nicht zu lange vom möglichen Maximum entfernt liegt (eine Suchrampe beginnt hier zum Zeitpunkt TS).

Nach dem Verfahren des konstanten Druckaufbaus werden Radgeschwindigkeitsüberbremsungen immer mit sehr hoher Dynamik provoziert, so daß ein Überschreiten des Maximums der μ-Schlupfkurve unvermeidbar ist. Da der fahrbahnbedingte Radantrieb um so kleiner wird, je weiter das Rad in den instabilen Schlupf einbricht, steigt die Blockiertendenz mitkopplungsbedingt an, so daß dann ein starker Druckabbau erforderlich ist, um die Radgeschwindigkeit wieder auszuregeln. Starke Druckmodulationen wirken vor allem bei Zweiradfahrzeugen unkomfortabel, belasten die Achsmechanik und führen praktisch immer zu Verlusten in der Fahrzeugverzögerung.

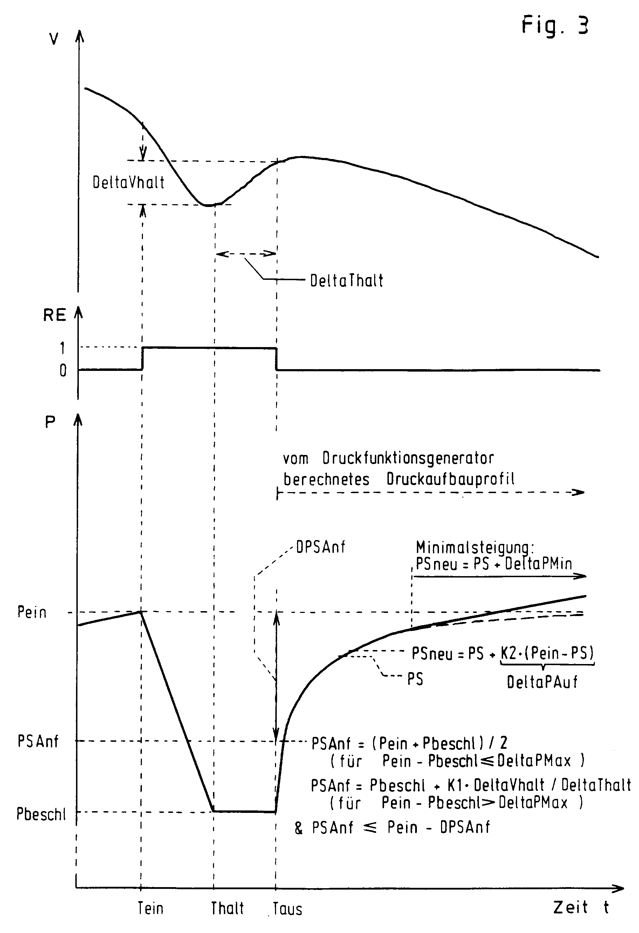

Figur 3 zeigt für eine Regelbremsung ein Zeitdiagramm der Radgeschwindigkeit und des Radbremsdrucks, der die Druckaufbaufunktion repräsentiert, die mit den nachfolgend beschriebenen Mechanismen generiert wird.

### Abspeichern des Radblockierdrucks

Wenn der ABS-Regler feststellt, daß eine Radblokkiertendenz aufgrund einer Überbremsung vorliegt, endet die Druckaufbauphase, und es erfolgt ein Umschalten auf die Druckreduzierungsphase. Zu diesem Zeitpunkt schaltet der ABS-Regler das Signal RE von '0' auf '1' (Radgeschwindigkeitseinbruch). Der Radbremszylinderdruck (bzw. die Kolbenstellung am betreffenden Kanal) wird nun in einem Register als Radblockierdruck Pein abgespeichert. Für die weitere Regelung kann davon ausgegangen werden, daß dieser Druckpunkt bei homogenem Untergrund ein geringfügig zu hoher Punkt ist.

### Geschwindigkeitsproportionale Entlastung mit Minimalgradient

Wenn eine Radüberbremsung erkannt wurde, erfolgt ein Druckabbau um einen Betrag, der in jedem Regelungszyklus proportional zum Radgeschwindigkeitsgradienten berechnet wird. Bei starker Blockiertendenz wird der Druck also stärker reduziert als bei einem langsamen Einlauf in zu große Schlupfbereiche. Um aber den zu erwartenden Mitkopplungseffekten entgegenzuwirken, erfolgt immer eine festgelegte Minimal-Druckreduzierung, auch wenn das Rad sehr langsam in den instabilen Schlupf läuft. Es wir davon ausgegangen, daß der ABS-Regler selbst einen derartigen Druckabbau durchführt, so daß der Druckfunktionsgenerator (4) dafür nicht zuständig ist.

### Abspeichern des Radbeschleunigungsdrucks

Die Druckabbauphase läuft so lange, bis das in zu große Schlupfbereiche eingelaufene Rad wieder eindeutig beschleunigt. Zu diesem Zeitpunkt beginnt die Druckhaltephase, d. h. der ABS-Regler hält den erreichten Bremsdruck konstant. Sollte die gemessene Fahrzeugverzögerung sehr klein sein, was auf einen niedrigen Reibwert des Untergrunds schließen läßt, so kann der ABS-Regler den Druckhaltepunkt bewußt etwas tiefer legen, damit das Rad besser beschleunigt und für einen kürzeren Zeitabschnitt im instabilen Schlupfbereich läuft, was besonders wichtig für ABS-geregelte Zweiräder ist.

Ferner überwacht der ABS-Regler in der Haltephase permanent den Geschwindigkeitsverlauf des Rades. Sollte die Beschleunigung in den stabilen Schlupf zu gering sein, so reduziert der ABS-Regler den Haltedruck noch geringfügig; entsprechend führt er einen geringen Druckaufbau durch, falls die Radbeschleunigung zu stark ansteigen sollte.

Wenn während der Druckhaltephase ein Übergang zu kleineren Reibwerten stattfinden sollte, so daß das Rad noch weiter in den instabilen Schlupf verzögert, so leitet der ABS-Regler wieder eine Druckabbauphase ein, der bei erneuter Radbeschleunigung wieder eine Druckhaltephase folgt.

All diese Maßnahmen des ABS-Reglers führen letztlich dazu, das Rad mit einer geeigneten Dynamik in einem vertretbaren Zeitbereich wieder in den stabilien Schlupf zu bringen.

Es ist wichtig, daß der Druckfunktionsgenerator (4) den Radbremszylinderdruck (bzw. die Druckkolbenstellung am betreffenden Radbremskanal) als Beschleunigungsdruck Pbeschl genau zu dem Zeitpunkt übernimmt, zu dem der ABS-Regler das Rad wieder erstmalig in den stabilen Schlupf gebracht hat und dies durch Rücksetzen des Signals RE von logisch '1' auf '0' anzeigt (s. Figur 3).

Bei homogenen Bodenverhältnissen ist dieser Druck Pbeschl für die weitere Regelung mit Sicherheit ein zu niedriger Wert, der in der Druckaufbauphase auf jeden Fall überschritten werden sollte.

### Berechnung eines guten Druckanfahrpunktes

Wenn das Rad am Ende der Druckhaltephase wieder in den stabilen Schlupfbereich eingelaufen ist, beginnt die Druckaufbauphase. Der ABS-Regler erkennt diesen Zustand anhand verschiedener Kriterien. Damit der eingestellte Bremsdruck über möglichst lange Zeiträume dicht am Optimum liegt, wird versucht, zunächst einen positiven Drucksprung aufzuschalten, der dazu führt, daß die exponentielle Wiederbelastungsfunktion bereits auf einem guten Druckniveau startet. Der durch den Drucksprung erreichte Druckstartpunkt wird hier als Druckanfahrpunkt bezeichnet. Es ist jedoch sehr wichtig für die Qualität der Regelung, daß der Drucksprung nicht sofort zur Radübelbremsung führt, da durch häufiges Druckauf- und -abbauen um große Beträge ein unruhiges Fahrzeugverhalten provoziert wird. Dies äußert sich beim PKW durch 'Lenkradflattern'. Motorräder mit weicher Vorderradaufhängung neigen zum Kippen (Abheben des Hinterrads) und zu 'Bocksprüngen'. Um diese Effekte zu vermeiden, wird der Druckanfahrpunkt PSAnf hier aus dem vorher gespeicherten Blockierdruck Pein und dem Radbeschleunigungsdruck Pbeschl berechnet und unter Berücksichtigung der Fahrzeugeigenschaften noch begrenzt, wobei jeder Radtyp bezüglich seiner Achscharakteristik und auch bezüglich der verwendeten Reifenklassen unterschiedlich behandelt wird.

Um den Druckanfahrpunkt zu berechnen, wird zunächst der arithmetrische Mittelwert aus dem Blockierdruck und dem Radbeschleunigungsdruck gebildet.

$$PSAnF = (Pein + Pbeschl) / 2$$

Wenn zum Ausregeln der Radblockierneigung zuvor ein großer Druckbetrag erforderlich war (Pein - Pbeschl > DeltaPMax), so erfolgt ein Drucksprung nicht auf den arithmetischen Mittelwert der beiden gespeicherten Referenzdruckpunkte, sondern die Höhe des Sprungs - ausgehend vom Grundwert Pbeschl - wird aus der Radbeschleunigung in der Druckhaltephase berechnet:

$$PSAnf = Pbeschl + K1 * DeltaVhalt / DeltaThalt$$

Diese zweite Funktion ist wichtig, falls die zuvor ausgeregelte Radüberbremsung durch einen Reibwertübergang zu niedrigeren Werten verursacht worden war. In diesem Fall muß der Druckhaltepunkt als Basiswert für die folgende Wiederbelastung angesehen werden. Der effektive Drucksprung besteht dann nur ausdem radbeschleunigungsabhängigen Term, der den während der Druckhaltephase existierenden Bremsmomentenunterschuß in Rechnung stellt. Je stärker das Rad in der Haltephase beschleunigt, desto größer wird der auf Pbeschl aufaddierte Drucksprung.

Um zu verhindern, daß die Sprünge bei zu großem Lastwechsel speziell bei Vorderrädern dynamisch zu hohe Druckwerte erzeugen, müssen noch bestimmte fahrzeugspezifische Randbedingungen eingehalten werden:

$$PSAnf <= Pein - DPSAnf$$

mit

$$DPSAnf = f1 (VREF) + f2 (AREF)$$

Die Funktionen f1 und f2 resultieren aus Versuchsmeßreihen und sind extrem fahrzeugspezifisch. Prinzipiell gilt die Regel, daß die Druckentlastung zum Ausregeln einer Radüberbremsung zu einem Lastwechsel führt, der mit der Stärke der Fahrzeugverzögerung wächst. Dieser Lastwechsel resultiert hauptsächlich aus der Ausfederung der Vorderachse. Folglich sind die Fahrzeugvorderräder anschließend um so weniger belastbar, je stärker die Fahrzeugverzögerung ist. Auf glattem Untergrund treten nur ganz geringe Lastwechsel durch die Vorderraddruckmodulationen auf, so daß ein zuvor entlastetes und daraufhin wieder im stabilen Schlupfbereich laufendes Rad sofort wieder mit einem Bremsdruck belastet werden kann, der dicht unter dem vorherigen Blockierdruck liegen darf, da aufgrund der Druckentlastung praktisch kein Verlust an Bodenaufstandskraft stattgefunden hat. Diese Effekte machen sich besonders bei einspurigen Fahrzeugen bemerkbar. Hier führt jede starke Druckerhöhung zu einem deutlichen Einfedern der Vorderradgabel; entsprechend bewirkt eine starke Vorderraddruckreduzierung ein sprungartiges Ausfedern der Gabel nach vorn, wobei der dynamische Verlust an Aufstandskraft kurzfristig noch deutlich höher sein kann, als man aufgrund der relativen Schwerpunktverlagerung erwarten muß (s. z. B. P 42 04 350.6).

Bei Hinderrädern treten entgegengesetzte Effekte auf. Jede Druckentlastung bewirkt einen Fahrzeugverzögerungsverlust, wobei sich die Radaufstandskraft und damit die Druckbelastbarkeit erhöht. Der Druckpunkt nach der Ausregelung einer Radblockiertendenz darf hier also dicht unter dem vorherigen Blockierdruck liegen. Dies gilt wiederum in besonderem Maße für einspurige Fahrzeuge, wenn nur das Hinterrad gebremst wird, da in diesem Fall allein die Hinterraddruckmodulationen für die Schwankungen in der Radaufstandskraft maßgeblich sind.

Mit wachsender Fahrzeuggeschwindigkeit können die Druckanfahrpunkte höher gelegt werden (dichter unter den Blockierdruck). Dabei spielt das Reifenverhalten eine entscheidende Rolle.

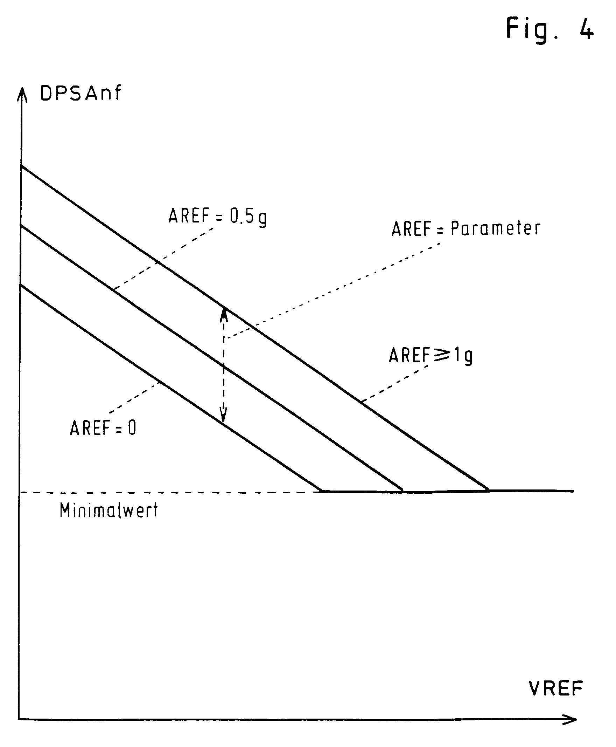

Figur 4 zeigt beispielhaft den maximalen Druckbetrag DPSAnf für ein Vorderrad. Durch das Tieferlegen des Anfahrpunkts PSAnf kann sichergestellt werden, daß dicht aufeinander folgende Blockierzustände - wie in Figur 2 dargestellt - auf homogenen Böden praktisch nicht mehr auftreten.

## Exponentielle Druckaufbaufunktion

Nach der Aufschaltung des Drucksprungs wird, beginnend beim erreichten Druckanfahrpunkt PSAnf bis zum zuvorgemerkten Blockierdruckpunkt Pein, eine exponentielle Druckrampe durchfahren, wobei der Druckgradient zunächst groß ist und dann bei Annäherung an den früheren Blockierdruckpunkt Pein immer flacher wird. Damit ergibt sich für die jeweilige Druckzunahme von einem Regelungszyklus zum nächsten:

$$DeltaPAuf = K2 * (Pein - PS) \text{ mit } K2 << 1$$

Der neue Bremsdruck-Sollwert ergibt sich einfach durch Erhöhung des vorherigen Wertes um DeltaPAuf:

$$PSneu = PS + DeltaPAuf$$

Dadurch, daß der Bremsdruck PS mit jedem Zyklus näher gegen Pein wächst, wird die Druckzunahme gemäß obiger Gleichung immer kleiner. Die Realisierung einer derartigen Funktion auf Mikrorechnern ist besonders einfach, indem als Faktor eine Zweierpotenz gewählt wird. Praktisch hat sich bei einer Regelungszykluszeit von 8ms der Wert 1/8 bewährt:

$$DeltaPAuf = (Pein - PS) / 8$$

Damit der Blockierdruck auch wirklich erreicht werden kann und die Rampe nicht nur asymptotisch gegen diesen Druckpunkt läuft, wird eine Minimalsteigung gefordert:

$$DeltaPAuf >= DeltaPMin$$

Der Wert von DeltaPMin muß fahrzeug- und radspezifisch eingestellt werden. Zusätzlich ist darauf zu achten, daß DeltaPMin so groß ist, daß die Wiederbelastungsrampe immer schon nach etwa 300ms zu einer leichten Radblockiertendenz führt. Durch das exponentielle Belastungsprofil wird schon früh ein hohes Druckniveau erreicht. Ferner kann dadurch der Anfahrpunkt PSAnf gemäß der Funktion aus Figur 4 relativ tief gelegt werden, ohne daß der weitere Druckverlauf zu niedrig liegt.

Bei allen betrachteten Druck- und Druckdifferenzwerten in den o. g. Gleichungen handelt es sich um relative Werte, d. h. zur korrekten Abarbeitung des Regelalgorithmus ist keine Kenntnis über die absoluten Größen der Drücke erforderlich. Entscheidend ist allein, daß das in Figur 3 gezeigte Druckprofil in den korrekten Relationen durchlaufen wird, was durch den nachfolgend beschriebenen Plunger-Druckmodulator ohne Aufwand über die meßbaren Kolbenstellungen erreicht werden kann.

## Möglichkeiten des Plunger-Prinzips

Bei Antiblockiersystemen, die auf der Basis des Plunger-Prinzips arbeiten, können die Radbremsdrücke über eine Positionsregelung ihrer Tauchkolben eingestellt werden. Wenn die Position des Tauchkolbens durch eine Wegemeßeinrichtung bestimmt wird, stehen dem ABS-Regler ständig Informationen über den erreichten Relativdruck zur Verfügung.

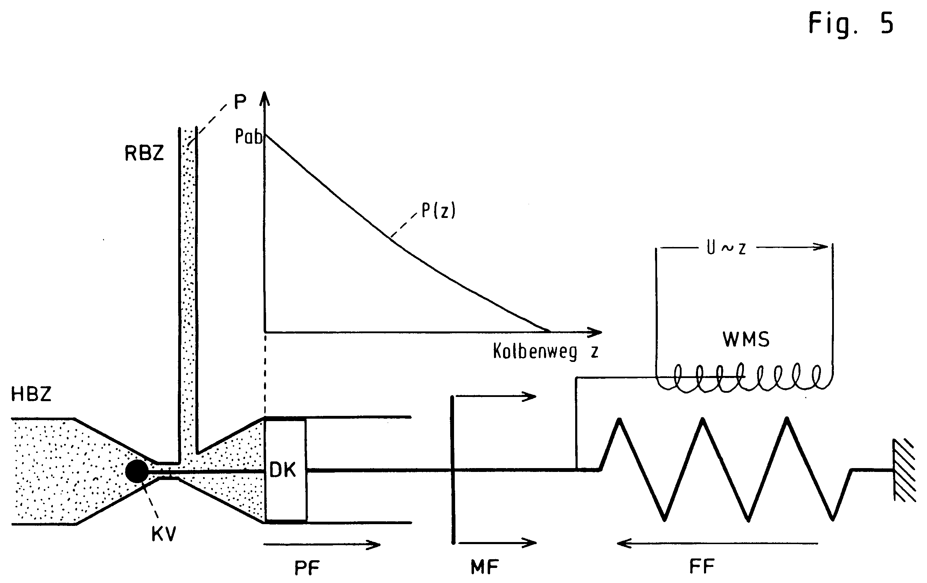

Figur 5 zeigt das Arbeitsprinzip für ein Fahrzeugrad. Während einer normalen Bremsung gelangt der vom Fahrer aufgebrachte Druck des Hauptbremszylinders (HBZ) direkt in den Radzylinderbremskreis (RBZ). Im Falle einer erkannten Überbremsung steuert der ABS-Regler eine Motorzugkraft (MF), so daß der Druckkolben (DR) über einen Hebel gegen die Kraft (FF) einer Druckfeder und unter Mithilfe der Innendruckkraft (PF) auf den Kolben in Richtung steigender Kolbenwege z verschoben wird. Schon bei einer geringen Kolbenverschiebung schließt sich das Kugelventil (KV), so daß der Radbremszylinderdruck vom Hauptbremszylinderdruck entkoppelt ist und der Druck Pab im Radbremskreis eingeschlossen wird. Je weiter nun der Kolben in Richtung des Weges z verschoben wird, um so stärker wird der Druck wegen der im Bremssystem vorhandenen Elastizitäten reduziert. Beginnend mit dem eingeschlossenen Druck Pab, wird über den Weg z eine gegen O abnehmende Druckfunktion durchfahren, die je nach Bremssystem linear bis leicht degressiv verläuft. Ein erneuter Druckaufbau wird durch Verschieben des Kolbens in Richtung kleinerer z-Werte erreicht, indem die Motorzugkraft (MF) so verringert wird, daß die Druckkraft (FF) der Feder wieder die Summe der aktiven Gegenkräfte (PF) und (MF) sowie der passiven Reibungskräfte des Systems übersteigt. Eine erreichte Wegstellung repräsentiert über die angegebene Druck-Weg-Funktion also direkt einen Bremsdruck relativ zu dem eingeschlossenen Druck Pab.

Solange das Kugelventil (KV) geschlossen bleibt, existiert ein eindeutiger Zusammenhang zwischen Kolbenweg z und Bremsdruck P. Sämtliche zuvor verwendeten Druckwerte können also ersetzt werden durch Wegwerte z, die beispielsweise eine induktiven Wegemeßspule anzeigt; alle Druckdifferenzbeträge (Druckabbau- und Druckaufbaugradienten) werden ersetzt durch Wegabschnitte. Wegen seiner analogen Eigenschaften ist der Plunger-Modulator außerdem in der Lage, die feinen Weg- bzw. Druckprofile aus Figur 3 recht exakt nachzufahren.

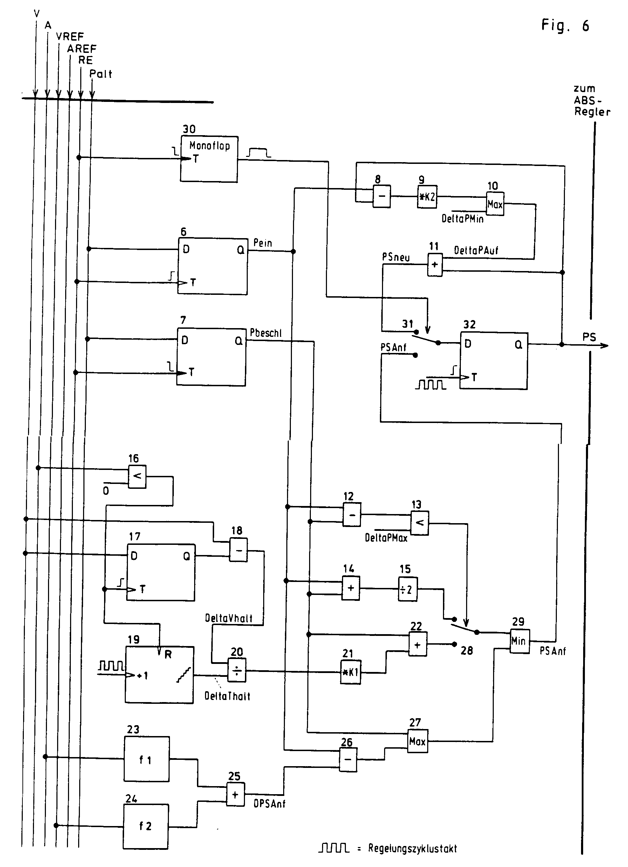

Figur 6 zeigt ein erfindungsgemäßes Realisierungsbeispiel. Der Druckfunktionsgenerator (4) speichert mit Hilfe des Registers (6) den Radbremsdruck Palt genau zu dem Zeitpunkt, wo der ABS-Regler das Signal RE von '0' auf '1' umschaltet und damit anzeigt, daß eine Radblockiertendenz erkannt wurde. Wenn das Rad durch Bremsdruckregelung des ABS-Reglers wieder in einen stabilen Schlupf eingelaufen ist, so daß der Regler das Signal RE wieder auf '0' zurücksetzt, so übernimmt das mit negativer Taktflanke getriggerte Register (7) den Radbremsdruck Palt als Referenzdruckpunkt Pbeschl.

Um den Anfahrpunkt PSAnf zu berechnen, werden zwei verschiedene Verfahren realisiert:

Der Addierer (14) und der Dividierer (15) führen eine Mittelwertbildung zwischen den beiden Referenzdrücken Pein und Pbeschl durch, um PSAnf zu bilden. Alternativ dazu berechnen die Komponenten (16) bis (21) einen Wert für PSAnf, der aus der Summe des Druckhaltewerts Pbeschl und einem radbeschleunigungsabhängigen Term besteht. Um die Radbeschleunigung während der Druckhaltephase zu bestimmen, hält das Register (17) die Radgeschwindigkeit V zu dem Zeitpunkt fest, wo das Rad wieder sicher beschleunigt. Dies veranlaßt der Vergleicher (16), der die Radbeschleunigung A mit 0 vergleicht und im Umschaltzeitpunkt von Radverzögerung auf Radbeschleunigung (A wechselt von positiven zu negativen Werten) eine positive Taktflanke auf das Register schaltet. Gleichzeitig wird der Haltephasenzähler (19) auf 0 gesetzt, indem die Flanke auf den Rücksetzeingang (R) von (19) gelangt. In jedem weiteren Regelungszyklus wird nun der Zählerstand von (19) um 1 erhöht, da der Regelungszyklustakt auf den Takteingang des Zählers (19) gelegt ist. Der Subtrahierer (18) bildet ständig die Differenz zwischen der aktuell erreichten Radgeschwindigkeit V und der im Register (17) gespeicherten Geschwindigkeit VMin. Die Differenz DeltaVhalt, also der Betrag, um den das Rad wieder beschleunigt wurde, wird durch den Dividierer (20) durch den Zählerstand von (19), also die Dauer der Druckhaltephase, dividiert und mit Hilfe des Multiplizierers (21) noch mit dem Normierungsfaktor K1 versehen. Der so berechnete Druckanteil wird durch den Addierer (22) auf den Haltedruck Pbeschl aufaddiert. Wie erwähnt, wird eines der beiden Berechnungsverfahren zur Bildung des Anfahrdruckpunktes PSAnf ausgewählt. Falls die Differenz zwischen dem Blockierdruck Pein und dem Haltedruck Pbeschl kleiner als DeltaPMax ist, so wird das erste Berechnungsverfahren gewählt. Dazu bildet der Subtrahierer (12) die Differenz zwischen Pein und Pbeschl, und der Vergleicher (13) überprüft, ob diese den Betrag DeltaPMax überschreitet. Bei einer Unterschreitung legt (13) eine logische '0' auf den Multiplexer (28), so daß der Wert des ersten Berechnungsverfahrens zum Minimumbilder (29) durchschaltet.

Dieser prüft, ob der berechnete Wert für PSAnf nicht zu hoch liegt. Dazu bilden die Komponenten (23) bis (27) gemäß Figur 4 eine Maximumfunktion für PSAnf, die aus fahrzeugdynamischen Gründen von dem berechneten Wert nicht, überschritten werden darf. Abhängig von der Fahrzeug-Referenzgeschwindigkeit VREF und von der Fahrzeug-Referenzverzögerung AREF berechnen die Funktionsblöcke (23) und (24) Druckanteile, die zunächst mit dem Addierer (25) aufaddiert und mit dem Subtrahierer (26) von dem Blockierdruck Pein subrahiert werden. Der Maximumbilder (27) schaltet diesen Wert auf seinen Ausgang, falls er größer ist als der Haltedruck Pbeschl, ansonsten wird Pbeschl selbst ausgegeben. Der Minimumbilder (29) begrenzt den für PSAnf berechneten Wert schließlich auf den von (27) gebildeten Maximalwert. Der endgültige Wert von PSAnf wird zu Beginn der Druckaufbauphase in das Register (32) übernommen, indem das durch die negative Flanke von RE getriggerte Monoflop einen positiven Impuls erzeugt, der für etwa 1.5 Regelungszyklen am Multiplexer (31) ansteht, so daß dieser PSAnf auf die Dateneingänge von (32) schaltet. Der Wert wird dann mit der nächsten positiven Flanke des Regelungszyklustaktes in das Register (32) als Rampenfunktionswert PS übernommen. Die Länge des Monoflop-Impulses ist so gewählt, daß zum Übernahmezeitpunkt der gültige Wert von PSAnf auch wirklich vorliegt.

Der Druckfunktionsgenerator bildet den weiteren Druckrampenverlauf mit den Komponenten (8) bis (11), indem der Subtrahierer (8) immer die Differenz aus dem gespeicherten Blockierdruck Pein und dem im vorherigen Regelungszyklus erreichten Radbremsdruck-Sollwert PS berechnet. Der Multiplizierer (9) versieht diese Differenz mit dem konstanten Faktor K2. Über den Maximumbilder (10) wird der Druckbetrag noch auf das Minimum DeltaPMin beschränkt. Der resultierende Druckbetrag DeltaPAuf, um den der erreichte Bremsdruck innerhalb des aktuellen Regelungszyklus erhöht werden soll, wird mit Hilfe des Addierers (11) auf den aktuell in (32) abgespeicherten Druckvorgabewert PS aufaddiert und mit der nächsten positiven Flanke des Regelungszyklustakts als neuer Wert von PS eingeschrieben, da der Multiplexer (31) durch den Rückgang des Monoflop-Impulses nun den oberen Kanal zum Register (32) durchschaltet.

Der ABS-Regler hat während der Druckaufbauphase (RE = '0') lediglich die Aufgabe, die Druckvorgabewerte PS zu übernehmen und mit Hilfe des Druckmodulators einzustellen.

In der Praxis zeigt sich, daß die Berechnung von fahrzeuggeeigneten Druckaufbaufunktionen mit exponentiellem Profil zu deutlich verbesserten Regelbremsungen gegenüber den bisher eingesetzten linearen Druckverläufen führt. Kurz aufeinander folgende Blockierzustände gemäß der Beispielsituation in Figur 2, die speziell bei Motorrädern mit hoher Rad- und Achsdynamik erhebliche Komfort- und Bremsverzögerungseinbußen verursachen, können auf homogenen Böden praktisch ganz vermieden werden, indem vor Ablauf der exponentiellen Druckrampen geeignet dosierte Druckanfahrpunkte PSAnf gemäß den angegebenen Gleichungen aufgeschaltet werden.

## Patentansprüche

1. Antiblockierregelsystem für Kraftfahrzeuge, bestehend aus Radsensoren, einer Überwachungsschaltung, die aus den Signalen der Sensoren Überbremsungszustände der Räder erkennt und entsprechende Ansteuersignale erzeugt, und einem Druckmodulator, der durch die Ansteuersignale die Bremsdrücke an den Fahrzeugrädern einstellt, dadurch gekennzeichnet, daß zur Komfortverbesserung und Verkürzung der Bremswege neben der Überwachungsschaltung (3) ein Druckfunktionsgenerator (4) vorgesehen ist, der für jedes Rad immer dann den Bremsdruck zwischenspeichert, wenn eine Radüberbremsung festgestellt wurde und als oberen Referenzdruck Pein speichert und den vom Druckmodulator reduzierten Bremsdruck als unteren Referenzpunkt Pbeschl abspeichert, bei dem das Rad wieder beschleunigt, und daß anschließend in der Druckaufbauphase der Druckfunktionsgenerator (4) dem Druckmodulator ein Signal gibt, um den Radbremsdruck zunächst steil und dann immer flacher nach einer Exponential-Funktion innerhalb des zeitlichen Verlaufes zwischen den beiden Druckpunkten ($P_{ein}$, $P_{beschl}$) zu erhöhen.

2. Antiblockierregelsystem nach Anspruch 1, dadurch gekennzeichnet, daß, falls die Differenz zwischen dem oberen und dem unteren Referenzpunkt groß ist, also eine starke Druckreduzierung notwendig war, um die vorherige Radblockiertendenz auszuregeln, der untere Referenzpunkt Pbeschl als Startpunkt PSAnf für die exponential verlaufende Druckrampe dient.

3. Antiblockierregelsystem nach Anspruch 1, dadurch gekennzeichnet, daß, falls die Differenz zwischen dem oberen und dem unteren Referenzpunkt groß ist, also eine starke Druckreduzierung notwendig war, um die vorherige Radblockiertendenz auszuregeln, und während der Druckhaltephase eine große Radbeschleunigung aufgetreten ist, der Startpunkt PSAnf der exponential verlaufenden Druckrampe aus der Summe des unteren Referenzpunktes und eines radbeschleunigungsabhängigen Terms gebildet wird, wobei der radbeschleunigungsabhängige Anteil aus der mittleren Radbeschleunigung in der Druckhaltephase multipliziert mit einem konstanten Faktor gebildet wird.

4. Antiblockierregelsystem nach Anspruch 1, dadurch gekennzeichnet, daß, falls die Differenz aus oberem und unterem Referenzpunkt klein ist, also nur eine schwache Druckreduzierung notwendig war, um die vorherige Radblockiertendenz auszuregeln, der Startpunkt PSAnf der exponential verlaufenden Druckrampe als arithmetischer Mittelwert aus oberem und unterem Referenzdruckpunkt gebildet wird.

5. Antiblockierregelsystem nach den Ansprüchen 1 bis 4, dadurch gekennzeichnet, daß der Startpunkt PSAnf für die exponential verlaufende Druckrampe auf einen Maximalwert beschränkt wird, der aus dem oberen Referenzdruckpunkt Pein, reduziert um einen konstanten Druckbetrag, gebildet wird.

6. Antiblockierregelsystem nach Anspruch 5, dadurch gekennzeichnet, daß anstelle des konstanten Druckbetrags ein fahrzeuggeschwindigkeitsabhängiger Betrag verwendet wird, wobei dieser Betrag mit wachsender Geschwindigkeit abnimmt, so daß sich bei höheren Geschwindigkeiten ein höherer Startpunkt PSAnf ergibt.

7. Antiblockierregelsystem nach Anspruch 6, dadurch gekennzeichnet, daß zu dem fahrzeuggeschwindigkeitsabhängigen Betrag noch ein fahrzeugverzögerungsabhängiger Betrag addiert wird, wobei dieser Betrag mit wachsender Verzögerung zunimmt, so daß sich bei höheren Verzögerungen ein tieferer Startpunkt PSAnf ergibt.

8. Antiblockierregelsystem nach den Ansprüchen 1 bis 7, dadurch gekennzeichnet, daß die exponential verlaufende Druckrampe auf eine Minimalsteilheit begrenzt ist, so daß sichergestellt ist, daß der obere Referenzdruckpunkt nicht nur asymptotisch erreicht sondern nach endlicher Zeit auch überschritten wird.

9. Antiblockierregelsystem nach den Ansprüchen 1 bis 8, dadurch gekennzeichnet, daß der Druckfunktionsgenerator (4) software-mäßig auf dem ABS-Controller als Bestandteil des ABS-Reglers implementiert wird.

## Claims

1. An anti-lock regulating system for motor vehicles, comprising wheel sensors, a monitoring circuit which uses the signals from the sensors to detect excessive braking of the wheels and generates corresponding actuating signals, and a pressure modulator which uses the actuating signals to adjust the braking pressures on the vehicle wheels, **characterised in that** in order to improve comfort and shorten the brake travel, the monitoring circuit (3) is accompanied by a pressure-function generator (4) which temporarily stores the braking pressure for each wheel whenever excessive braking is detected and stores an upper reference pressure Pein and stores a lower reference point Pbeschl, being the braking pressure reduced by the pressure modulator and at which the wheel again accelerates, and subsequently in the pressure building-up phase the pressure-function generator (4) delivers a signal to the pressure modulator in order to increase the wheel-braking pressure, initially steeply and then progressively more gradually, in accordance with an exponential function within the time sequence between the two pressure points (Pein, Pbeschl).

2. An anti-lock regulating system according to claim 1, **characterised in that** if the difference between the upper and the lower reference point is large, so that a large pressure reduction is necessary in order to compensate the previous tendency towards wheel locking, the lower reference point Pbeschl serves as the starting point PSAnf for the exponential pressure slope.

3. An anti-lock regulating system according to claim 1, **characterised in that** if the difference between the upper and the lower reference point is large, so that a large pressure reduction is necessary in order to compensate the previous tendency towards wheel locking, and if considerable acceleration of the wheels has occurred during the pressure-maintaining phase, the starting point PSAnf of the exponential pressure slope is formed from the sum of the lower reference point and a term dependent on the wheel acceleration, the wheel acceleration-dependent component being formed from the average wheel acceleration in the pressure-maintaining phase multiplied by a constant factor.

4. An anti-lock regulating system according to claim 1, **characterised in that** if the difference between the upper and lower reference point is small, so that only a small pressure reduction is necessary in order to compensate the previous tendency towards wheel locking, the starting point PSAnf of the exponential pressure slope is formed as the arithmetical mean of the upper and lower reference pressure point.

5. An anti-lock regulating system according to claims 1 to 4, **characterised in that** the starting point PSAnf for the exponential pressure slope is restricted to a maximum value formed from the upper reference pressure point Pein reduced by a constant pressure value.

6. An anti-lock regulating system according to claim 5, **characterised in that** the constant pressure value is replaced by a value dependent on the speed of the vehicle, the latter value decreasing with increasing speed, so that the starting point PSAnf is higher at higher speeds.

7. An anti-lock regulating system according to claim 6, **characterised in that** a value dependent on deceleration of the vehicle is added to the value dependent on the speed of the vehicle, the added value increasing with increasing deceleration, so that the starting point PSAnf is lower at higher deceleration.

8. An anti-lock regulating system according to claims 1 to 7, **characterised in that** the exponential pressure slope is limited to a minimum steepness so as to ensure that the upper reference pressure point is not only reached asymptotically but is also exceeded after a finite time.

9. An anti-lock regulating system according to claims 1 to 8, **characterised in that** the pressure-function generator (4) software is implemented on the anti-lock controller in the form of a component of the anti-lock regulator.

**Revendications**

1. Système de régulation antiblocage pour des véhicules automobiles, constitué par des palpeurs de roue, par un circuit de surveillance qui détecte à partir des signaux des palpeurs des états de blocage des freins des roues et qui produit des signaux de pilotage correspondants, et par un modulateur de pression qui, à partir des signaux de pilotage, règle des pressions de freinage vers les roues du véhicule automobile, caractérisé en ce qu'il est prévu, pour améliorer le confort et pour raccourcir les trajets de freinage, outre le circuit de surveillance (3), un générateur de fonction de pression (4) qui mémorise temporairement pour chaque roue la pression de freinage chaque fois qu'un blocage des freins des roues a été détecté et qui mémorise comme pression de référence supérieure une valeur $P_{ein}$ et qui mémorise la pression de freinage réduite par le modulateur de pression comme pression de référence inférieure la valeur $P_{beschl}$ à laquelle la roue réaccélère, et en ce que dans la phase d'établissement de pression le générateur de fonction de pression (4) envoie ensuite au modulateur de pression un signal pour augmenter la pression de freinage de la roue tout d'abord brusquement et puis de plus en plus doucement, suivant une fonction exponentielle à l'intérieur de l'évolution temporelle entre les deux points de pression ($P_{ein}$, $P_{beschl}$).

2. Système de régulation antiblocage selon la revendication 1, caractérisé en ce que, au cas où la différence entre le point de référence supérieur et le point de référence inférieur est importante, donc qu'une forte réduction de pression a été nécessaire pour compenser la tendance précédente au blocage des roues, le point de référence inférieur Pbeschl sert de point de départ $PS_{Anf}$ pour la courbe de pression s'étendant de façon exponentielle.

**3.** Système de régulation antiblocage selon la revendication 1, caractérisé en ce que, au cas où la différence entre le point de référence supérieur et le point de référence inférieur est importante, donc qu'une forte réduction de pression a été nécessaire pour compenser la tendance précédente au blocage des roues, et qu'une forte accélération des roues s'est produite pendant la phase de maintien de pression, le point de départ $PS_{Anf}$ pour la courbe de pression s'étendant de façon exponentielle est formé par la somme du point de référence inférieur et d'un terme dépendant de l'accélération des roues, la part dépendant de l'accélération des roues étant formée par l'accélération moyenne des roues pendant la phase de maintien de pression, multipliée par un facteur constant.

**4.** Système de régulation antiblocage selon la revendication 1, caractérisé en ce que, au cas où la différence entre le point de référence supérieur et le point de référence inférieur est faible, donc que seulement une faible réduction de pression a été nécessaire pour compenser la tendance précédente au blocage des roues, le point de départ $PS_{Anf}$ pour la courbe de pression s'étendant de façon exponentielle est formé comme valeur moyenne arithmétique du point de référence supérieur et du point de référence inférieur.

**5.** Système de régulation antiblocage selon l'une quelconque des revendications 1 à 4, caractérisé en ce que le point de départ $PS_{Anf}$ pour la courbe de pression s'étendant de façon exponentielle est restreint à une valeur maximum qui est formée par le point de référence de pression supérieur $P_{ein}$, réduit d'une valeur de pression constante.

**6.** Système de régulation antiblocage selon la revendication 5, caractérisé en ce que l'on utilise, au lieu de la valeur de pression constante, une valeur dépendante de la vitesse du véhicule automobile, et cette valeur diminue lorsque la vitesse augmente, de sorte que pour des vitesses plus élevées, il en résulte un point de départ $PS_{Anf}$ plus élevé.

**7.** Système de régulation antiblocage selon la revendication 6, caractérisé en ce qu'à la valeur dépendant de la vitesse du véhicule automobile est additionnée une valeur dépendant de la décélération du véhicule, et cette valeur augmente lorsque la décélération augmente, de sorte que pour des décélérations plus élevées, il en résulte un point de départ $PS_{Anf}$ plus bas.

**8.** Système de régulation antiblocage selon l'une quelconque des revendications 1 à 7, caractérisé en ce que la courbe de pression s'étendant de façon exponentielle est limitée à une pente minimum, de sorte que l'on assure que le point de pression de référence supérieur est atteint non seulement de façon asymptotique, mais qu'il est également dépassé après un temps fini.

**9.** Système de régulation antiblocage selon l'une quelconque des revendications 1 à 8, caractérisé en ce que le générateur de fonction de pression (4) est mis en oeuvre sous forme d'un logiciel sur le contrôleur du système antiblocage en faisant partie du régulateur du système antiblocage.

Fig. 1

EP 0 572 808 B1

Fig. 2

Fig. 3

V

DeltaVhalt

DeltaThalt

RE

1

0

P

vom Druckfunktionsgenerator
berechnetes Druckaufbauprofil

DPSAnf

Minimalsteigung:
PSneu = PS + DeltaPMin

Pein

PSneu = PS + K2·(Pein-PS)
_____
DeltaPAuf

PS

PSAnf

PSAnf = (Pein + Pbeschl) / 2
( für    Pein - Pbeschl ≤ DeltaPMax )

PSAnf = Pbeschl + K1· DeltaVhalt / DeltaThalt
( für    Pein - Pbeschl > DeltaPMax )

Pbeschl

& PSAnf ≤ Pein - DPSAnf

Tein        Thalt        Taus                                    Zeit  t

Fig. 4

Fig. 5

EP 0 572 808 B1

Fig. 6